# FASCICULE DE BREVET EUROPEEN

(11) **EP 0 785 099 B1**
(45) Date de publication et mention de la délivrance du brevet: **11.07.2001**
(21) Numéro de dépôt: 96402686.8
(22) Date de dépôt: 10.12.1996
(51) Int. Cl.: B60J 7/057

(54) **Dispositif de commande de la position d'un toit ouvrant de véhicle automobile**
Betätigungseinrichtung der Position eines Kraftfahrzeug-Schiebedaches
Operating device for the position of a sunroof in motor vehicle

(30) Priorité: 17.01.1996 FR 9600493
(43) Date de publication de la demande: 23.07.1997
(73) Titulaire: AUTOMOBILES PEUGEOT, 75116 Paris (FR); AUTOMOBILES CITROEN, 92200 Neuilly-sur-Seine (FR)
(72) Inventeur: Dallemagne, Daniel, 78700 Conflans Sainte-Honorine (FR)
(74) Mandataire: Habasque, Etienne Joel Jean-François

(56) Documents cités:
- EP-A- 0 691 724
- DE-A- 4 337 745
- 180 ATZ-AUTOMOBILTECHNISCHE ZEITSCHRIFT, vol. 90, no. 03, Mars 1988, STUTTGART,DE, pages 117-120, XP002013041 HARRY GAUS,WOLFGANG VOGEL: "POSITIOSAUTOMATIK-KOMFORT UND SICHERHEIT FÜR DAS SCHIEBEDACH"

## Description

La présente invention concerne un dispositif de commande de la position d'un toit ouvrant de véhicule automobile.

On connaît déjà dans l'état de la technique, (voir par exemple le document 180-ATZ- Automobil Technische Zeitschrift, volume 90, n° 03, Mars 1988, Stuttgart, DE, pages 117-120), des dispositifs de commande de ce type, qui comportent un organe de commande monté déplaçable angulairement devant des moyens de repère de position du toit, et associé à des moyens de détection de position, dont la sortie est reliée à des moyens de commande de moyens de déplacement du toit ouvrant, comportant des moyens de détection de la position de celui-ci raccordés aux moyens de commande pour amener le toit ouvrant dans la position souhaitée par l'utilisateur.

Les moyens de repère de position associés à l'organe de commande correspondent en fait à des positions présélectionnées du toit ouvrant, que l'utilisateur peut sélectionner en déplaçant l'organe de commande pour amener un repère quelconque de celui-ci en regard d'un repère correspondant à la position sélectionnée du toit.

D'une manière générale, cet organe de commande se présente sous la forme d'une molette rotative dont les positions extrêmes sont délimitées par des butées angulaires.

C'est ainsi par exemple que cette molette de commande permet de choisir une position d'ouverture du toit ouvrant prédéfinie en entrebâillement ou en coulissement.

Différentes positions prédéfinies peuvent être sélectionnées et ces positions peuvent par exemple correspondre à une ouverture à 25% du toit ouvrant, à une ouverture à 50% et une ouverture maximale de celui-ci.

Ces différentes positions sont par exemple repérées par des indications 1,2 et 3, un repère 0 correspondant à la position fermée du toit ouvrant.

Dans ce cas, la position de l'organe de commande correspond à la demande de l'utilisateur, tandis que les moyens de commande amènent les moyens de déplacement du toit ouvrant à placer celui-ci dans la position d'ouverture ou de fermeture correspondante. La position du toit ouvrant est alors asservie à la position de l'organe de commande.

Cependant, les mécanismes de déplacement des toits ouvrants de véhicules automobiles sont souvent équipés d'une fermeture automatique de ceux-ci lors de la condamnation des véhicules.

Si le toit ouvrant est en position d'ouverture à la condamnation du véhicule, les moyens de commande amènent alors celui-ci à se déplacer vers sa position de fermeture, mais l'organe de commande reste dans une position qui ne correspond pas à la position de fermeture du toît.

Par ailleurs, les mécanismes de toits ouvrants des véhicules sont également équipés de dispositifs d'anti-pincement. Ces dispositifs d'anti-pincement provoquent la réouverture d'un toit ouvrant en cas de détection d'un obstacle lors de la fermeture de celui-ci.

On conçoit alors que si l'utilisateur sélectionne la position de fermeture du toit ouvrant et que le dispositif d'anti-pincement détecte un obstacle, celui-ci commande la réouverture du toit ouvrant, de sorte que ce toit s'arrêtera dans une position qui ne correspond pas à la position de fermeture sélectionnée par l'utilisateur, l'organe de commande étant dans une position correspondant à la fermeture du toit ouvrant.

Pour résoudre ces problèmes, il est possible d'équiper l'organe de commande d'un micro-moteur ou de moyens d'actionnement appropriés, pilotés par les moyens de commande et permettant de placer cet organe de commande en regard du repère correspondant à la position réelle du toit.

Cependant, on conçoit que ceci présente un certain nombre d'inconvénients, notamment au niveau du coût de réalisation d'une telle structure.

Le but de l'invention est donc de résoudre ces problèmes.

A cet effet, l'invention a pour objet un dispositif de commande de la position d'un toit ouvrant de véhicule automobile, du type comportant un organe de commande monté déplaçable angulairement devant des moyens de repère de position du toit, et associé à des moyens de détection de position, dont la sortie est reliée à des moyens de commande de moyens de déplacement du toit ouvrant, comportant des moyens de détection de la position de celui-ci, raccordés aux moyens de commande pour amener le toit ouvrant dans la position souhaitée par l'utilisateur, caractérisé en ce que l'organe de commande est un organe rotatif sans butée angulaire et en ce que les moyens de repère de position sont associés à des moyens d'indication visuelle à l'utilisateur de la position du toit ouvrant, dont le fonctionnement est piloté par les moyens de commande.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure d'un dispositif de commande de l'état de la technique;
- la Fig.2 représente de façon synoptique l'implantation d'un organe de commande entrant dans la constitution d'un dispositif de commande de l'état de la technique;
- la Fig.3 représente un schéma synoptique illustrant la structure d'un dispositif de commande selon l'invention; et
- la Fig.4 représente un schéma synoptique illustrant l'implantation d'un organe de commande entrant dans la constitution d'un dispositif de commande selon l'invention.

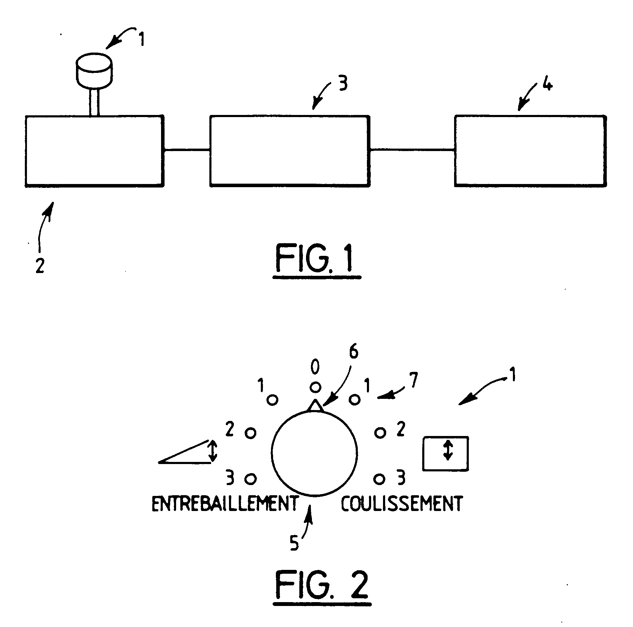

Ainsi qu'on peut le voir sur les figures 1 et 2, un dispositif de commande de la position d'un toit ouvrant de véhicule automobile, de l'état de la technique, comporte un organe de commande désigné par la référence générale 1, qui sera décrit plus en détail par la suite, et qui est monté déplaçable angulairement devant des repères de position du toit, cet organe de commande étant associé à des moyens de détection de position, désignés par la référence générale 2, dont la sortie est reliée à des moyens de commande 3 de moyens 4 de déplacement du toit ouvrant.

Ces moyens de déplacement du toit ouvrant comprennent par exemple un motoréducteur électrique de déplacement de celui-ci, associé à des moyens de détection de la position de celui-ci, raccordés aux moyens de commande 3 pour amener le toit ouvrant dans la position souhaitée par l'utilisateur.

Comme on peut le voir sur la figure 2, l'organe de commande désigné par la référence générale 1 peut comporter une molette rotative désignée par la référence générale 5 comportant un repère quelconque 6 tel qu'une partie en saillie de celui-ci, monté déplaçable devant des repères de position prédéfinie, désignés par la référence générale 7 sur cette figure.

Ces repères de position peuvent matérialiser différentes positions d'ouverture du toit ouvrant en entrebâillement et en coulissement comme cela est illustré.

En fait, cet organe de commande peut comporter une molette rotative à crans 5 dont les positions extrêmes en rotation sont délimitées par des butées angulaires de façon classique.

C'est ainsi que cette molette 5 est déplaçable angulairement entre des positions extrêmes repérées par 3 sur cette figure 2 et correspondant à une position maximale d'ouverture en coulissement ou en entrebâillement du toit ouvrant.

Comme on l'a indiqué précédemment, ce type de dispositifs présente un certain nombre d'inconvénients car la position réelle du toit ouvrant peut ne pas correspondre à la position sélectionnée par l'utilisateur et matérialisée par la position de la molette.

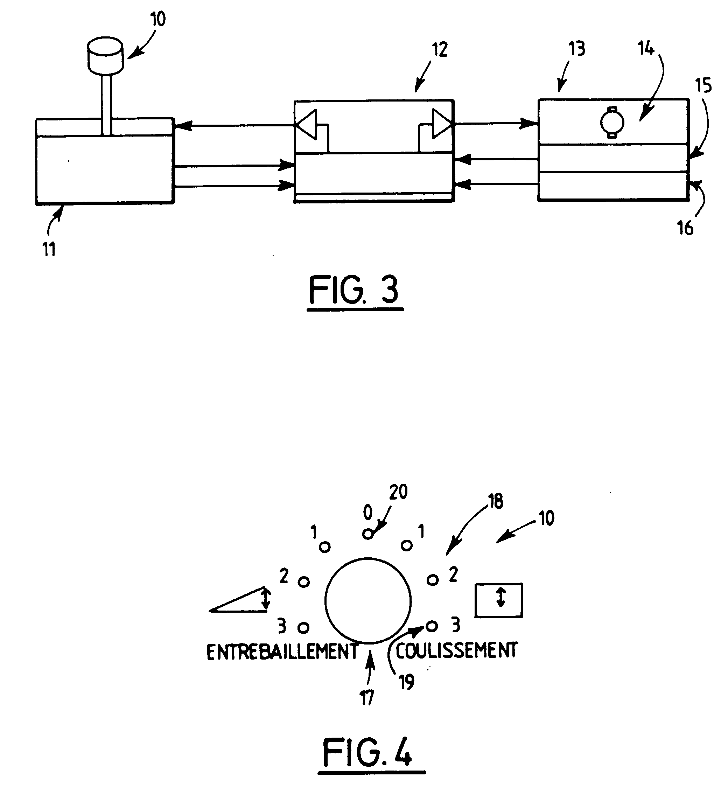

Pour résoudre ces problèmes et comme cela est représenté sur les figures 3 et 4, l'organe de commande est un organe de commande rotatif sans butée angulaire et les repères de position du toit ouvrant sont associées à des moyens d'indication visuelle à l'utilisateur de la position de ce toit ouvrant, dont le fonctionnement est piloté par les moyens de commande de la position du toit.

On reconnait en effet sur ces figures, un organe de commande 10, qui sera décrit plus en détail par la suite, et qui est associé à des moyens de détection de position 11, dont la sortie est reliée à des moyens de commande désignés par la référence générale 12 sur la figure 3, permettant de piloter le fonctionnement de moyens 13 de déplacement du toit ouvrant.

Comme cela est illustré sur cette figure 3, ces moyens de déplacement comportent par exemple un motoréducteur électrique de déplacement 14, associé à un capteur de position 15 du toit et à un dispositif d'anti-pincement 16 de types classiques.

La commande du motoréducteur électrique 14 est assurée par les moyens de commande 12, ces moyens de commande recevant des informations à partir du capteur de position 15 et du dispositif d'anti-pincement 16 tels que décrits précédemment.

De plus, l'organe de commande désigné par la référence générale 10, peut par exemple comporter une molette à crans telle qu'une molette magnétique connue dans l'état de la technique, associée aux moyens de détection de position 11 permettant de délivrer des informations d'incrémentation et de décrémentation de position aux moyens de commande 12.

Cette molette est par exemple désignée par la référence générale 17 sur la figure 4 et est en fait une molette rotative sans butée angulaire, c'est-à-dire à rotation libre, alors que les moyens de repère de position disposés autour de cette molette et désignés par exemple par la référence 18 sur cette figure 4, sont associés à des moyens 19 d'indication visuelle à l'utilisateur de la position du toit ouvrant, dont le fonctionnement est piloté par les moyens de commande 12.

C'est ainsi par exemple que chaque repère de position des moyens 18 peut être associé à un indicateur 20 de type diode électroluminescente, dont le fonctionnement, c'est-à-dire l'allumage ou l'extinction par exemple, est piloté par les moyens de commande 12 pour indiquer à l'utilisateur la position dans laquelle se trouve réellement le toit ouvrant.

Cette commande de ces moyens 19 d'indication visuelle de la position du toit ouvrant est assurée par les moyens de commande 12 à partir des informations délivrées par le capteur de position 15 du toit ouvrant.

C'est ainsi par exemple que lorsque le toit ouvrant est en position de fermeture, l'indicateur visuel associé au repère de la position O, par exemple 20 dans l'exemple illustré, peut être allumé, tandis que les autres indicateurs, associés aux autres repères de position, peuvent être éteints, ce qui permet d'indiquer à l'utilisateur que le toit ouvrant est bien dans une position de fermeture.

On conçoit alors que ces moyens 19 d'indication visuelle permettent d'indiquer à l'utilisateur la position réelle du toit ouvrant, que cette position ait été sélectionnée par l'utilisateur ou qu'elle résulte du fonctionnement par exemple du dispositif d'anti-pincement ou du système de fermeture automatique de celui-ci lors de la condamnation du véhicule.

Ces moyens d'indication visuelle peuvent par exemple être constitués par une diode électroluminescente dont l'allumage et l'extinction sont commandés par les moyens de commande.

Il va de soi également que des diodes électroluminescentes bicolores dont le fonctionnement est piloté par les moyens de commande, peuvent également être utilisées pour indiquer visuellement à l'utilisateur la position dans laquelle se trouve le toit ouvrant.

Cependant, on notera que celui-ci doit être un organe rotatif sans butée angulaire dans la mesure où la position relative de celui-ci par rapport aux moyens de repère de position n'a plus d'importance, car la position du toit est matérialisée par pilotage des moyens d'indication visuelle 19 associés aux moyens de repère de position 18.

On conçoit alors que le dispositif de commande selon l'invention présente un certain nombre d'avantages par rapport aux dispositifs de l'état de la technique dans la mesure où il permet à l'utilisateur d'obtenir une indication de la position réelle du toit ouvrant pour assurer une commande correspondante de celui-ci en toute sécurité et en connaissant cette position.

## Revendications

1. Dispositif de commande de la position d'un toit ouvrant de véhicule automobile, du type comportant un organe de commande (17) monté déplaçable angulairement devant des moyens (18) de repère de position du toit, et associés à des moyens (11) de détection de position dont la sortie est reliée à des moyens de commande (12) de moyens de déplacement (13) du toit ouvrant, comportant des moyens de détection (15) de la position de celui-ci, raccordés aux moyens de commande (12) pour amener le toit ouvrant dans la position souhaitée par l'utilisateur, caractérisé en ce que l'organe de commande (17) est un organe rotatif sans butée angulaire et en ce que les moyens de repère de position (18) sont associés à des moyens (19) d'indication visuelle à l'utilisateur de la position du toit ouvrant, dont le fonctionnement est piloté par les moyens de commande (12).

2. Dispositif selon la revendication 1, caractérisé en ce que les moyens d'indication visuelle (19) comprennent des diodes électroluminescentes (20) dont le fonctionnement est piloté par les moyens de commande (12).

3. Dispositif selon la revendication 2, caractérisé en ce que les diodes électroluminescentes (20) sont des diodes bicolores dont le fonctionnement est piloté par les moyens de commande (12).

4. Dispositif selon l'une quelconque des revendications précédentes, caractérisé en ce que l'organe de commande (17) comporte une molette à crans et en ce que les moyens (11) de détection de position de celle-ci sont adaptés pour délivrer des informations d'incrémentation et de décrémentation de position aux moyens de commande (12).

5. Dispositif selon la revendication 4, caractérisé en ce que ladite molette (17) est une molette magnétique.

## Patentansprüche

1. Vorrichtung zum Einstellen der Position des Schiebedaches eines Kraftfahrzeuges mit einem Bedienungselement (17), das winkelverstellbar Einrichtungen (18) zum Markieren der Position des Schiebedaches gegenüber angebracht und mit Stellungserfassungseinrichtungen (11) verbunden ist, deren Ausgang mit Steuereinrichtungen (12) für Einrichtungen (13) zum Verstellen des Schiebedaches verbunden ist, die mit Einrichtungen (15) zum Erfassen seiner Position versehen sind, die mit den Steuereinrichtungen (12) verbunden sind, um das Schiebedach in die vom Benutzer gewünschte Position zu bringen, dadurch gekennzeichnet, daß das Bedienungselement (17) ein Drehelement ohne Winkelanschlag ist und den Einrichtungen zum Markieren der Position (18) Einrichtungen (19) zur optischen Anzeige der Position des Schiebedaches für den Benutzer zugeordnet sind, deren Funktion über die Steuereinrichtungen (12) gesteuert ist.

2. Vorrichtung nach Anspruch 1, dadurch gekennzeichnet, daß die Einrichtungen (19) zur optischen Anzeige Leuchtdioden (20) umfassen, deren Funktion durch die Steuereinrichtungen (12) gesteuert ist.

3. Vorrichtung nach Anspruch 2, dadurch gekennzeichnet, daß die Leuchtdioden (20) zweifarbige Dioden sind, deren Funktion durch die Steuereinrichtungen (12) gesteuert ist.

4. Vorrichtung nach einem der vorhergehenden Ansprüche, dadurch gekennzeichnet, daß das Bedienungselement (17) ein Schrittschalträndelrad umfaßt, und daß die Stellungserfassungseinrichtungen (11) für seine Stellung so ausgebildet sind, daß sie Informationen über die Zunahme oder Abnahme der Position den Steuereinrichtungen (12) liefern.

5. Vorrichtung nach Anspruch 4, dadurch gekennzeichnet, daß das besagte Rändelrad (17) ein magnetisches Rändelrad ist.

## Claims

1. Device for controlling the position of a motor vehicle sunroof of the type comprising a control member (17) fitted in angularly displaceable manner in front of-means (18) for marking the position of the sunroof and associated with position detection means (11), whose outlet is connected to means (12) for controlling the sunroof displacement means (13), incorporating means (15) for detecting the position thereof, which are connected to the control means (12) in order to bring the sunroof into the position desired by the user, characterized in that the control member (17) is a rotary member without an angular abutment and in that the position marking means (18) are associated with means (19) for visually indicating to the user the position of the sunroof and whose operation is controlled by the control means (12).

2. Device according to claim 1, characterized in that the visual indication means (19) comprise light emitting diodes (20), whose operation is controlled by the control means (12).

3. Device according to claim 2, characterized in that the light emitting diodes are bicoloured diodes, whose operation is controlled by the control means (12).

4. Device according to any one of the preceding claims, characterized in that the control member (17) comprises a notched wheel and in that the means (11) for detecting the position thereof are adapted so as to provide position incrementation and decrementation information to the control means (12).

5. Device according to claim 4, characterized in that the wheel (17) is a magnetic wheel.
